# DEMANDE DE BREVET EUROPEEN

(11) **EP 3 591 372 A1**
(43) Date de publication de la demande: **08.01.2020**
(21) Numéro de dépôt: 19183276.5
(22) Date de dépôt: 28.06.2019
(51) Int. Cl.: G01N 1/02

(54) **DISPOSITIF DE COLLECTE DE PARTICULES**

(30) Priorité: 04.07.2018 FR 1856146
(71) Demandeur: Commissariat à l'Énergie Atomique et aux Énergies Alternatives, 75015 Paris (FR)
(72) Inventeur: REVOL-CAVALIER, Frédéric, 38054 GRENOBLE Cedex 9 (FR)
(74) Mandataire: GIE Innovation Competence Group

(57) **Abrégé**

L'invention concerne un dispositif (1, 10) de collecte de particules (P) présentes sur une surface (S1, S2), ledit dispositif comprenant un support (2, 20) présentant une surface de collecte (30) et comportant un matériau de type hydrosoluble déposé sur ladite surface de collecte (30) du support, ledit matériau hydrosoluble étant constitué d'un gel (3) présentant une viscosité comprise entre 500 mPa s et 50000 mPa s.

## Description

### Domaine technique de l'invention

La présente invention se rapporte à un dispositif de collecte de particules présentes sur une surface et à un procédé de collecte de particules mis en oeuvre à l'aide dudit dispositif.

### Etat de la technique

La collecte de particules présentes sur une surface est utile pour différentes applications, notamment pour :
- Vérifier l'efficacité d'une décontamination après une pollution,
- Effectuer des analyses sur les particules collectées,
- Vérifier la propreté des conteneurs employés dans l'industrie agro-alimentaire...

Dans toutes ces applications, il est utile de disposer d'un dispositif qui permet d'effectuer un prélèvement simple et rapide de particules. Par particules, on entend tous types de composés biologiques, comme des bactéries, des molécules d'ADN, des spores, ou toute autre type de particules, telles que des billes, des poussières, biofilm ou pollen.

Des dispositifs de collecte de particules sont déjà connus dans l'état de la technique. Les solutions les plus courantes utilisent des "cotons tiges" ou des pinceaux qui sont appliqués sur la surface pour prélever les particules présentes. Les particules collectées sont ensuite décrochées de l'outil de prélèvement par immersion dans une solution tampon spécifique. Des kits de détections, en général des bandelettes, sont ensuite utilisés pour déterminer la nature de la contamination. Ces solutions sont performantes dès lors qu'il y a une contamination importante (poudre suspecte, tâche etc...). En revanche, lorsque la contamination est faible, il est nécessaire d'opérer une collecte de plus grande envergure pour augmenter le nombre de particules collectées.

Pour la collecte de particules sur une grande surface, il existe des équipements sous forme d'aspirateur ou de collecteur. Ce type d'équipement comporte un compresseur qui envoie de l'eau stérile sous pression dans une douchette qui décolle les contaminations de la surface traitée (tissu, surface fibreuse, etc...). Une deuxième zone de la douchette permet également de récupérer l'eau chargée de particules par aspiration. L'eau et les particules aspirées sont récupérées dans un réservoir et seront ensuite analysées dans un laboratoire. Ce dispositif est centré sur la récupération d'ADN mais pourrait également être utilisé pour d'autres contaminations (particules, bactéries, spores etc...). Cette solution s'avère cependant particulièrement encombrante.

Une autre technique utilisée dans l'industrie alimentaire pour s'assurer qu'une partie d'une chaine de fabrication est contaminée par des bactéries consiste à utiliser des éponges stériles pour collecter les bactéries après avoir humidifié la zone de collecte par une solution tampon. L'éponge va collecter le liquide déposé avec les bactéries puis le liquide sera récupéré et mis en culture quelques heures ou jours pour vérifier la présence de bactéries. Cependant, dans cette solution, les bactéries peuvent se coller sur la surface du matériau constituant l'éponge (polyuréthane, polypropylène...) et par conséquent ne pas être présente dans le liquide récupéré. Par ailleurs, ces éponges ne sont pas adaptées pour collecter les particules sur de grande surface et peuvent même étaler la contamination d'un endroit A souillé vers un endroit B non souillé. Enfin, l'éponge nécessite souvent d'être humidifiée préalablement à la collecte.

La demande de brevet référencée FR2366554A1 (correspondant US4144760) décrit un dispositif de prélèvement utilisant un plastique hydrosoluble qui après humidification dévient collant et permet la capture de particules biologiques sur une surface par apposition. Une fois la capture terminée, le film plastique est solubilisé partiellement ou complétement pour collecter les éléments capturés. Cette technique nécessite une humidification préalable du film plastique pour le dissoudre partiellement et le rendre collant. Cette étape est très délicate car si l'humidification est insuffisante le matériau n'est pas assez collant et si elle est trop importante le matériau se dissout et n'assure plus sa fonction de collecte.

Les documents WO2017/209628A1**,** US2011/256531A1 et US4144760A1 décrivent également des dispositifs de prélèvement.

Le but de l'invention est donc de proposer un dispositif qui permet de réaliser une collecte de particules présentes sur une surface de manière rapide et fiable, qui soit simple à utiliser et efficace, qui ne nécessite pas l'humidification du dispositif, ni de la surface à traiter et qui peut être employé pour de petites ou de grandes surfaces.

### Exposé de l'invention

Ce but est atteint par un dispositif de collecte de particules présentes sur une surface, ledit dispositif comprenant une tige, un support présentant une surface de collecte et comportant un matériau de type hydrosoluble déposé sur ladite surface de collecte du support, ledit matériau hydrosoluble étant constitué d'un gel présentant une viscosité comprise entre 500 mPa s et 50000 mPa s. Le support est formé d'un rouleau en forme de cylindre de révolution présentant une surface latérale formant ladite surface de collecte, ledit rouleau étant monté rotatif autour de ladite tige formant un axe de rotation.

Selon une particularité, ledit gel est réalisé à base d'un matériau hydrosoluble choisi parmi le polyvinyle alcool (PVA), polyvinyle pyrrolidone (PVP), polyéthylène glycol, le caséinate de sodium, amidon, dextrine ou colle aqueuse.

Selon une autre particularité, ledit gel est réalisé à partir d'une composition qui comporte du polyvinyle alcool dans une proportion comprise entre 10% et 40% en poids, de l'eau dans une proportion comprise entre 40% et 80% en poids et du glycérol dans une proportion comprise entre 20 et 40% en poids, par rapport au poids total de la composition.

Selon une autre particularité, ledit gel est réalisé à partir d'une composition qui comporte du polyvinyle alcool dans une proportion de 20% en poids, d'eau dans une proportion de 60% en poids et de glycérol dans une proportion de 20%, par rapport au poids total de la composition.

Selon une autre particularité, le support comporte au moins une partie portant ladite surface de collecte et réalisée dans un matériau déformable en compression présentant un degré de déformabilité élastique en compression au moins égal à 50% par rapport à sa forme initiale.

Selon une autre particularité, le matériau déformable est choisi parmi une mousse de type polyuréthane, polychlorure de vinyle et/ou polyéthylène.

L'invention concerne également un procédé de collecte de particules présentes sur une surface, ledit procédé étant mis en oeuvre à l'aide d'un dispositif de collecte tel que défini ci-dessus et comportant les étapes suivantes :
- Utilisation du dispositif par mise en contact dudit gel contre ladite surface afin de collecter lesdites particules,
- Immersion au moins partielle de ladite surface de collecte dudit dispositif dans une solution aqueuse pour dissoudre ledit gel dans ladite solution aqueuse.

Selon une particularité, lorsque le support comporte une partie en matériau déformable portant la surface de collecte, le procédé comporte une étape de compression de ladite partie en matériau déformable mise en oeuvre pendant l'étape d'immersion.

### Brève description des figures

D'autres caractéristiques et avantages vont apparaître dans la description détaillée qui suit faite en regard des dessins annexés dans lesquels :
- Les figures 1A et 1B représentent le dispositif de collecte de l'invention selon un premier mode de réalisation,
- La figure 2 représente les différentes étapes mises en oeuvre à l'aide du dispositif des figures 1A et 1B pour la collecte de particules sur une surface,
- Les figures 3A et 3B représentent le dispositif de collecte de l'invention selon un deuxième mode de réalisation,
- La figure 4 représente les différentes étapes mises en oeuvre à l'aide du dispositif des figures 3A et 3B pour la collecte de particules sur une surface,

### Description détaillée d'au moins un mode de réalisation

Le dispositif 1, 10 de l'invention est destiné à la collecte de particules présente sur une surface.

Il comporte un support 2, 20 doté d'une surface de collecte 30. Selon un aspect particulier de l'invention, le support 2, 20 peut être formé d'un rouleau en forme de cylindre de révolution présentant une surface latérale formant ladite surface de collecte 30. Le rouleau peut être monté rotatif autour d'une tige 4 formant un axe de rotation (X). La tige 4 peut être reliée à une poignée de préhension 5 du dispositif.

Le dispositif comporte un matériau hydrosoluble, recouvrant au moins partiellement la surface de collecte 30, avantageusement toute la surface de collecte 30 du support.

Selon un aspect particulier de l'invention, le matériau hydrosoluble se présente sous la forme d'un gel 3. Par gel, on entend un matériau qui comporte une viscosité suffisante, notamment comprise entre 500 mPa s et 50000 mPa s.

De manière non limitative, le matériau hydrosoluble employé pour réaliser le gel de collecte des particules peut être choisi parmi l'un des composés suivants :
- Le polyvinyle alcool (PVA),
- Le polyvinyle pyrrolidone (PVP),
- Le polyéthylène glycol,
- Le caséinate de sodium,
- L'amidon,
- La dextrine,
- Une colle aqueuse, de type vinylique ou acrylique ou une colle de type Néoprène

De manière plus précise, ledit gel 3 peut être réalisé à partir d'une composition qui comporte du polyvinyle alcool (PVA) dans une proportion comprise entre 10% et 40% en poids, de l'eau dans une proportion comprise entre 40% et 80% en poids et du glycérol dans une proportion comprise entre 20 et 40% en poids, par rapport au poids total de la composition. De manière avantageuse, ledit gel est réalisé à partir d'une composition qui comporte du polyvinyle alcool dans une proportion de 20% en poids, de l'eau dans une proportion de 60% en poids et du glycérol dans une proportion de 20%, par rapport au poids total de la composition.

Le gel 3 est déposé sur la surface de collecte 200 du support 2, 20. Dans le cas d'un support en forme de rouleau, il est donc déposé sur la surface latérale du rouleau.

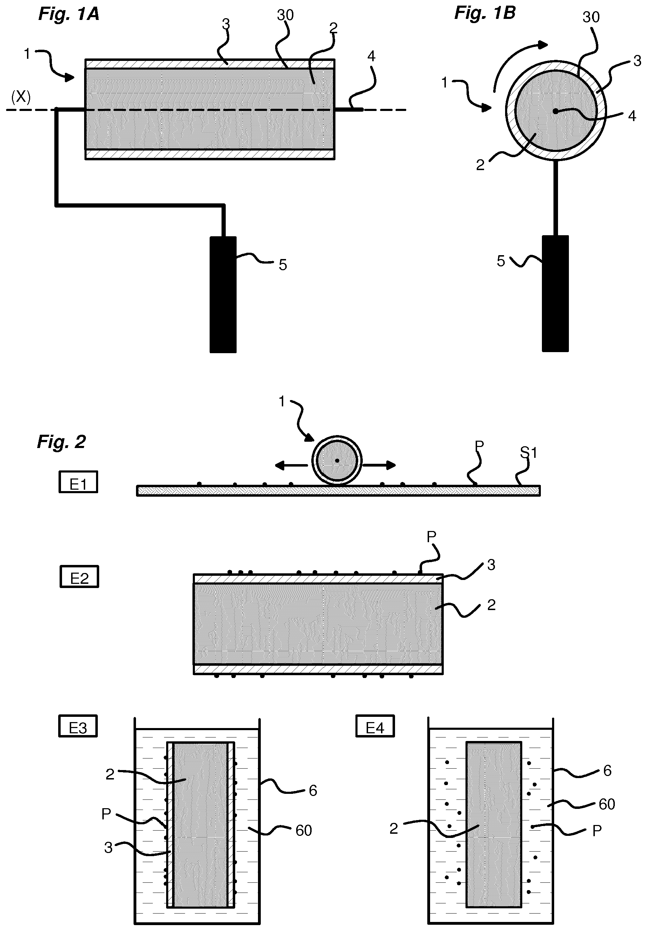

Dans le premier mode de réalisation représenté sur les figures 1A et 1B, le support 2 est réalisé en totalité dans un matériau non déformable, par exemple un plastique dur.

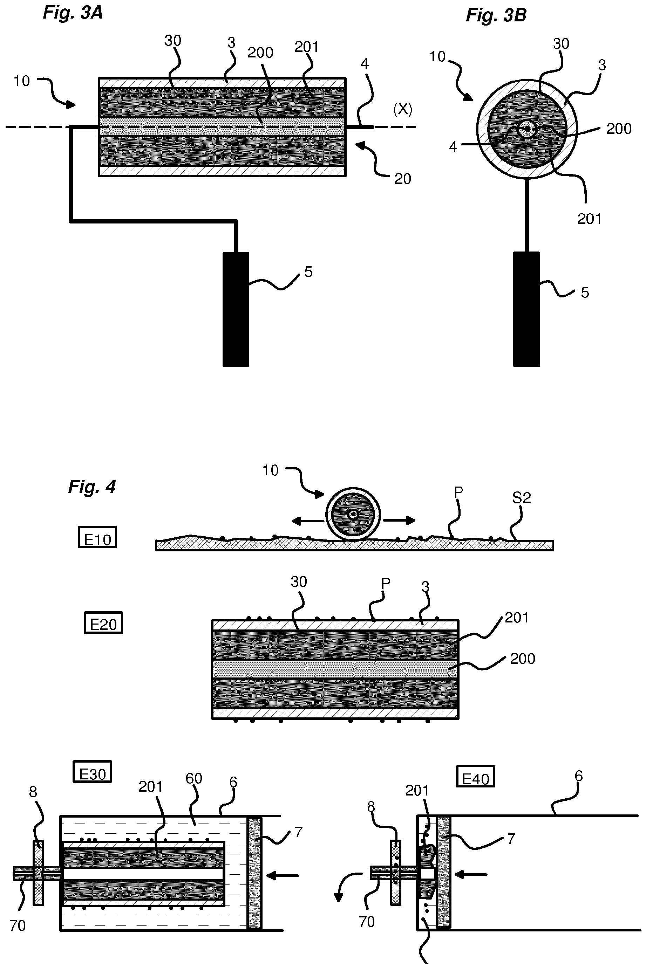

Dans le deuxième mode de réalisation représenté sur les figures 3A et 3B, la surface de collecte 30 est portée par une partie 201 du support 20 qui est fabriquée dans un matériau déformable élastiquement. Le degré de déformabilité élastique dudit matériau déformable peut être égal à au moins 50% par rapport à sa forme initiale. Le support 20 peut être formé en totalité dans le même matériau déformable ou être composé de plusieurs matériaux déformables distincts. Il peut également comporter une âme centrale axiale 200 rigide lui conférant une certaine tenue mécanique et recouverte de ladite partie 201 en matériau déformable portant la surface de collecte. La partie 201 du support pourra par exemple être retirée de l'âme centrale 200 pour la collecte des particules prélevées.

Utiliser une surface de collecte 30 réalisée sur une partie en matériau déformable présente plusieurs avantages, notamment :
- Cela permet de mieux épouser la surface (surface S2 sur la figure 4) à prélever et de s'adapter aussi irrégularités de cette surface, tout en permettant toujours une collecte efficace ;
- Cela permet de pouvoir comprimer la partie déformable 201 du support lors de la récupération des particules collectés et donc de maximiser le rendement du dispositif ;

Le matériau déformable peut être une mousse déformable, telle que par exemple une mousse polymère, par exemple de type polyuréthane (PU), polychlorure de vinyle (PVC), polyéthylène (PE), ou silicone.

Le principe de collecte de particules repose sur l'apposition de la surface de collecte 30 du support imprégné du gel 3 sur la surface S1, S2 à prélever.

Avec le support en forme de rouleau rotatif, il s'agit donc de faire rouler sa surface de collecte sur la surface à prélever.

En référence à la figure 2, les différentes étapes du procédé de collecte mis en oeuvre à l'aide d'un dispositif 1 conforme au premier mode de réalisation de l'invention, sont les suivantes :
E1 : Le dispositif 1 est prêt à l'emploi et ne nécessite aucune préparation. Le gel 3 est en effet déjà présent sur la surface de collecte 30 du rouleau et le dispositif est toujours prêt à l'emploi.
E2 : le rouleau est apposé sur la surface S1 à prélever (surface plane ici dans cet exemple) de manière à mettre en contact le gel 3 présent sur le rouleau avec la surface S1 à prélever. Le passage du rouleau sur la surface S1 à prélever permet d'entraîner le rouleau en rotation autour de son axe (X). Lors de l'application du rouleau, les particules P présentes sur la surface S1 à prélever sont décollées de la surface à prélever et viennent coller au gel 3. Plusieurs passages peuvent être nécessaires.
E3 : Les particules P sont collectées sur la surface de collecte 30 du dispositif. Pour être récupérées, la surface de collecte est immergée au moins partiellement ou même en totalité dans une solution aqueuse 60, par exemple un tampon aqueux (ex : phosphate salin - PBS), présente dans un réservoir 6 de collecte. Pour faciliter l'immersion, le support 2 en entier peut être désolidarisé du reste du dispositif.
E4 : Pendant l'immersion de la surface de collecte, le gel 3 se dissout dans la solution aqueuse 60, libérant ainsi les particules P collectées dans la solution. Une analyse de la solution aqueuse 60 permettra ensuite d'identifier les particules P qui ont été collectées.

En référence à la figure 4, le procédé de collecte mis en oeuvre avec un dispositif 10 présentant au moins une partie du support en matériau déformable se déroule de la manière suivante :
E10 : Identique à E1 ci-dessus. Le gel 3 est en effet déjà présent sur le support 20.
E20 : Identique à E2 ci-dessus. La partie 201 en matériau déformable du support 20 permet de mieux s'adapter aux irrégularités de la surface à prélever (surface S2 choisie irrégulière dans cet exemple).
E30 : La surface de collecte 30 est immergée dans une solution aqueuse 60 présente dans le réservoir 6. Pour faciliter l'immersion, la partie déformable 201 du support peut être désolidarisée du reste du dispositif et notamment de l'âme centrale 200 du support 20. Si le support 20 est entièrement réalisé dans un matériau déformable tel que décrit ci-dessus, il est immergé en totalité dans la solution 60.
E40 : Le gel 3 et les particules P sont dissoutes dans la solution aqueuse 60. Pour faciliter leur dissolution et améliorer le rendement du dispositif 10, la partie déformable 201 du support peut être comprimée, permettant ainsi de libérer la totalité ou presque des particules P collectées dans la solution aqueuse 60.

Un équipement spécial peut être prévu pour faciliter cette compression. Il s'agit de prévoir un piston 7 mobile en translation dans ledit réservoir 6. En déplaçant le piston 7 en translation, le liquide du réservoir 6 est poussé vers l'extérieur à travers une sortie fluidique 70 et la partie déformable 201 du support est comprimé contre une surface d'appui. La translation du piston est permise dans les limites de compression de la partie déformable du support. Lors de l'évacuation du liquide, un filtre 8, ou même plusieurs filtres de porosité différentes pour séparer en taille les différentes particules collectées, peut être prévu sur le chemin de la sortie fluidique 70 pour capter les particules P.

Le dispositif de l'invention présente ainsi de nombreux avantages, parmi lesquels :
- Il est simple à mettre en oeuvre ;
- Il permet de prélever tous types de surface, de tailles variables et de profils variables ;
- Il est toujours prêt à l'emploi, ne nécessitant pas une humidification préalable ;
- Il permet une récupération des particules après collecte, par l'étape d'immersion et éventuellement par l'étape de compression ;

## Revendications

1. Dispositif (1, 10) de collecte de particules (P) présentes sur une surface (S1, S2), ledit dispositif comprenant :
- une tige,
- un support (2, 20) présentant une surface de collecte (30),
- un matériau de type hydrosoluble déposé sur ladite surface de collecte (30) du support, ledit matériau hydrosoluble est constitué d'un gel (3) présentant une viscosité comprise entre 500 mPa s et 50000 mPa s,
**caractérisé en ce que** :
- le support (2, 20) est formé d'un rouleau en forme de cylindre de révolution présentant une surface latérale formant ladite surface de collecte (30), ledit rouleau étant monté rotatif autour de ladite tige formant un axe de rotation (X).

2. Dispositif selon la revendication 1, **caractérisé en ce que** ledit gel (3) est réalisé à base d'un matériau hydrosoluble choisi parmi le polyvinyle alcool (PVA), polyvinyle pyrrolidone (PVP), polyéthylène glycol, le caséinate de sodium, amidon, dextrine ou colle aqueuse.

3. Dispositif selon la revendication 1 ou 2, **caractérisé en ce que** ledit gel (3) est réalisé à partir d'une composition qui comporte du polyvinyle alcool dans une proportion comprise entre 10% et 40% en poids, de l'eau dans une proportion comprise entre 40% et 80% en poids et du glycérol dans une proportion comprise entre 20 et 40% en poids, par rapport au poids total de la composition.

4. Dispositif selon la revendication 3, **caractérisé en ce que** ledit gel (3) est réalisé à partir d'une composition qui comporte du polyvinyle alcool dans une proportion de 20% en poids, d'eau dans une proportion de 60% en poids et de glycérol dans une proportion de 20%, par rapport au poids total de la composition.

5. Dispositif selon l'une des revendications 1 à 4, **caractérisé en ce que** le support (20) comporte au moins une partie (201) portant ladite surface de collecte (30) et réalisée dans un matériau déformable en compression présentant un degré de déformabilité élastique en compression au moins égal à 50% par rapport à sa forme initiale.

6. Dispositif selon la revendication 5, **caractérisé en ce que** le matériau déformable est choisi parmi une mousse de type polyuréthane, polychlorure de vinyle et/ou polyéthylène.

7. Procédé de collecte de particules (P) présentes sur une surface (S1, S2), **caractérisé en ce qu'**il est mis en oeuvre à l'aide d'un dispositif (1, 10) de collecte tel que défini dans l'une des revendications 1 à 6 et **en ce qu'**il comporte les étapes suivantes :
- Utilisation du dispositif (1, 10) par mise en contact dudit gel (3) contre ladite surface (S1, S2) afin de collecter lesdites particules (P),
- Immersion au moins partielle de ladite surface de collecte (30) dudit dispositif (1, 10) dans une solution aqueuse (60) pour dissoudre ledit gel (3) dans ladite solution aqueuse.

8. Procédé selon la revendication 7, **caractérisé en ce que** lorsque le support (20) comporte une partie (201) en matériau déformable portant la surface de collecte (30), le procédé comporte une étape de compression de ladite partie (201) en matériau déformable mise en oeuvre pendant l'étape d'immersion.
